# EUROPEAN PATENT APPLICATION

(11) **EP 2 570 687 A1**
(43) Date of publication of application: **20.03.2013**
(21) Application number: 11780474.0
(22) Date of filing: 19.04.2011
(51) Int. Cl.: F16C 33/78, F16H 55/36

(54) **BALL BEARING WITH BOTH SIDES SEALED**

(30) Priority: 11.05.2010 JP 2010109349
(71) Applicant: NTN Corporation, Osaka-shi, Osaka 550-0003 (JP)
(72) Inventor: KATAYAMA Yasuyuki, Iwata-shi Shizuoka 438-0037 (JP)
(74) Representative: Grünecker, Kinkeldey, Stockmair & Schwanhäusser
(86) International application number: PCT/JP2011/059593
(87) International publication number: WO 2011/142217

(57) **Abstract**

A ball bearing with seals on both sides is provided which is configured such that the pressure in the bearing interior is less likely to drop when a belt guide ring cools after it has been formed by resin molding, thus preventing the inwardly extending lip of each rubber seal from being pressed against the inner side surface of the seal groove. The belt guide ring (21) is formed on the radially outer surface of an outer race (2) of the bearing. Seal fitting grooves (8) are formed on the radially inner surface of the outer race (2) at its respective end portions. A rubber seal (10) has its radially outer portion fitted in each seal fitting groove (8). The rubber seal (10) has an inwardly extending lip (12) formed at its radially inner portion and having its tip elastically kept in contact with an inner side surface of one of two seal grooves (9) formed on the radially inner surface of an inner race (3) of the bearing, thereby sealing the bearing interior, and having an inwardly extending lip (12) having a tip which is kept in elastic contact with an inner side surface (9a) of the corresponding seal groove (9), thereby sealing the bearing interior. The contact surface of the inwardly extending seal lip (12) which is in elastic contact with the inner side surface (9a) of the seal groove (9) is formed with a recess (18) extending a limited circumferential range of the contact surface and defining a minute gap in cooperation with the inner side surface (9a) of the seal groove (9). With this arrangement, when the temperature and thus the pressure in the bearing interior rises when the belt guide ring (21) is formed by resin molding, the pressure is released to the exterior of the bearing through the gap defined by the recess (18). The pressure in the bearing interior is thus kept constant when the guide ring cools down after resin molding. This prevents the inwardly extending lip (12) from being pressed hard against the inner side surface (9a) of the seal groove (9) of the inner race (3).

## Description

### TECHNICAL FIELD

This invention relates to ball bearing with seals on both sides which includes a torque transmission member formed on the outer race by resin molding, such as a resin pulley for guiding a timing belt for driving camshafts in an automotive engine or a belt for driving engine accessories.

### BACKGROUND ART

One known pulley for guiding a timing belt for driving camshafts is a resin pulley as disclosed in Patent document 1, which includes a ball bearing, and a belt guide ring made of a synthetic resin and formed on the radially outer surface of the outer race of the ball bearing by e.g. injection molding.

Since this resin pulley is exposed to the atmosphere around the engine, the ball bearing has seals on both sides to prevent entry of splashed muddy water into the bearing and to prevent lubricating grease from leaking out.

### PRIOR ART DOCUMENTS

### PATENT DOCUMENTS

Patent document 1: JP Patent Publication 2008-151258A

### SUMMARY OF THE INVENTION

### OBJECT OF THE INVENTION

With such conventional ball bearings with seals on both sides, a rubber seal has its radially outer portion fitted in each of seal engaging grooves formed on the radially inner surface of the outer race at its respective ends, and includes an inwardly extending lip formed at the radially inner portion of the rubber seal with its tip elastically pressed against the inner side surface of one of seal grooves formed on the radially outer surface of the inner race at its respective ends. In this arrangement, since the bearing interior is completely sealed, when the belt guiding ring is formed on the outer race by resin molding, the temperature and thus the pressure in the bearing interior rise, and then when the resin cools, the pressure in the bearing interior drops. When the pressure in the bearing interior drops, the rubber seals are elastically deformed inwardly. This could cause the inwardly extending lip of each rubber seal to be elastically pressed hard against the inner side surface of the seal groove, which could in turn increase torque loss.

The increased inner pressure also increases the contact pressure of the inwardly extending lips and thus accelerates wear of the contact portions of the lips, which deteriorates the durability of the seals.

An object of this invention is to provide a ball bearing with seals on both sides which is configured such that the pressure in the bearing interior is less likely to drop when the torque transmission member such as the belt guide ring cools after it has been formed by resin molding, thus preventing the inwardly extending lip of each rubber seal from being pressed against the inner side surface of the seal groove, and which is high in sealability.

### MEANS TO ACHIEVE THE OBJECT

In order to achieve the above object, the present invention provides a ball bearing with seals on both sides, comprising an outer race formed with two seal fitting grooves on a radially inner surface of the outer race, each at one of two end portions of the outer race, a torque transmission member formed on a radially outer surface of the outer race by resin molding, an inner race provided radially inwardly of the outer race and formed with two seal grooves on a radially outer surface of the inner race, each at one of two end portions of the inner race, and rubber seals each having a radially outer portion fitted in the corresponding seal fitting groove, and having an inwardly extending lip having a tip which is kept in elastic contact with an inner side surface of the corresponding seal groove, thereby sealing the bearing interior, wherein a contact surface of the inwardly extending seal lip which is in elastic contact with the inner side surface of the seal groove is formed with a recess extending a limited circumferential range of the contact surface and defining a minute gap in cooperation with the inner side surface of the seal groove.

By forming the recess in the contact surface of the inwardly extending lip that is brought into elastic contact with the inner side surface of the seal groove, the recess defines the above-mentioned gap, through which bearing interior communicates with the exterior of the bearing. Thus, when the temperature and thus the pressure in the bearing interior rises when the torque transmission member is formed on the radially outer surface of the outer race, the pressure is released to the exterior of the bearing through the gap.

This prevents an increase in pressure in the bearing interior, and the pressure in the bearing interior is kept constant even when the bearing cools down after resin molding, thus preventing the inwardly extending lip of each rubber seal from being attracted to and pressed against the inner side surface of the seal groove of the inner race. This in turn prevents increase in torque loss during operation of the bearing.

The recess formed in the inwardly extending lip is not limited in shape, and may be an arcuate groove or a rectangular groove. The deeper this groove, the more likely foreign matter such as dust and water is to enter the bearing and also the more likely bearing lubricating grease is to leak out. But if the groove is too shallow, the groove may not serve as a vent passage for equalizing the pressure between the interior and exterior of the bearing. All considered, the recess has preferably a depth h of 0.01 to 0.08 mm.

Since the rubber seals of the ball bearing according to the present invention are heated when the rubber seals are in contact with the bearing lubricating grease or the torque transmission member is formed by resin molding, the rubber seals are preferably made of a rubber which is resistant to oil and heat, such as nitrile rubber, heat-resistant nitrile rubber, hydrogenated nitrile rubber, acrylic rubber, or fluororubber.

The torque transmission member formed on the radially outer surface of the outer race may be a pulley or a roller.

### ADVANTAGES OF THE INVENTION

According to the present invention, each rubber seal has an inwardly extending lip at its radially inner portion, the lip having a contact surface which is in elastic contact with the inner side surface of a seal groove of the inner race and which is formed with a recess extending a limited circumferential range of the contact surface and defining a minute gap in cooperation with the inner side surface of the seal groove. The recess minimizes reduction in pressure in the bearing interior when the bearing cools down after resin molding. This prevents the inwardly extending lips from being pressed against the inner side surfaces of the respective seal grooves of the inner race, which in turn prevents an increase in torque loss.

The gap defined by the recess and the inner side surface of the seal groove is so small that the gap never impairs sealability of the bearing. As the tip of the inwardly extending lip gradually becomes worn while the bearing is rotating due to contact with the inner side surface of the seal groove, the recess eventually disappears, allowing the tip of the inwardly extending lip to come into contact with the inner side surface of the seal groove over the entire surface of the tip of the lip. Thus, the sealability improves gradually with the passage of time.

### BRIEF DESCRIPTION OF THE DRAWINGS

Fig. 1 is a vertical sectional front view of a resin pulley including a ball bearing with seals on both sides according to the present invention.
Fig. 2 is a partial enlarged sectional view of the ball bearing of Fig. 1.
Fig. 3 is an enlarged sectional view of an inwardly extending lip shown in Fig. 2.
Fig. 4(I) is a sectional view taken along line IV-IV of Fig. 3; and Fig. 4(II) is a similar sectional view showing a different recess.
Fig. 5 is a sectional view of the inwardly extending lip after the recess has disappeared.

### BEST MODE FOR EMBODYING THE INVENTION

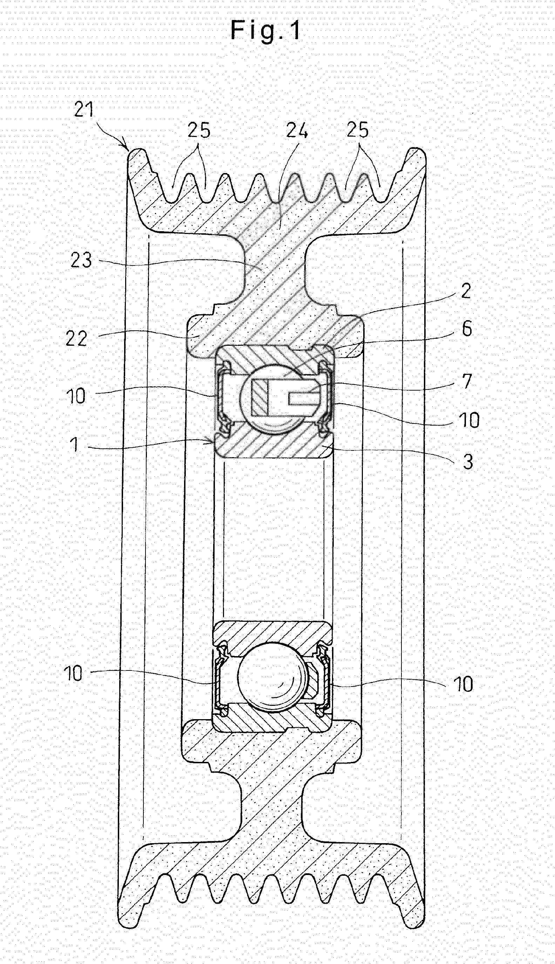

The embodiment of the present invention is described with reference to the drawings. Fig. 1 shows a resin pulley including the ball bearing with seals on both sides according to the present invention. The resin pulley includes, besides the ball bearing 1, a belt guiding ring 21 formed on the radially outer surface of the ball bearing 1 as a torque transmission member.

The belt guiding ring 21 comprises a boss portion 22 enclosing the radially outer portions of the respective side surfaces of the ball bearing 1 and its radially outer surface, a disk portion 23 extending radially outwardly from the radially outer surface of the boss portion 22, and a rim portion 24 extending in both axial directions from the radially outer portion of the disk portion 23. The rim portion 24 has a plurality of rows of V-shaped grooves on its radially outer surface.

The belt guiding ring 21 is formed by injecting molten resin into a cavity of a mold with the ball bearing 1 fixed in position in the mold such that the cavity is located radially outwardly of the ball bearing 1.

The ball bearing 1 comprises an outer race 2 having a raceway 4 formed on its radially inner surface, an inner race 3 having a raceway 5 formed on its radially outer surface, a plurality of balls 6 mounted between the raceways 4 and 5, and a retainer 7 retaining the balls 6.

Two seal fitting grooves 8 are formed on the radially inner surface of the outer race 2 at the respective axial end portions. Two seal grooves 9 are formed on the radially outer surface of the inner race 3 that are radially opposed to the respective seal fitting grooves 8.

A rubber seal 10 is fitted at its radially outer portion in each of the two seal fitting grooves 8 formed on the outer race 2. The rubber seals 10 are made of an oil-resistant and heat-resistant rubber such as nitrile rubber, heat-resistant nitrile rubber, hydrogenated nitrile rubber, acrylic rubber and fluororubber, and each reinforced by a metal core 11.

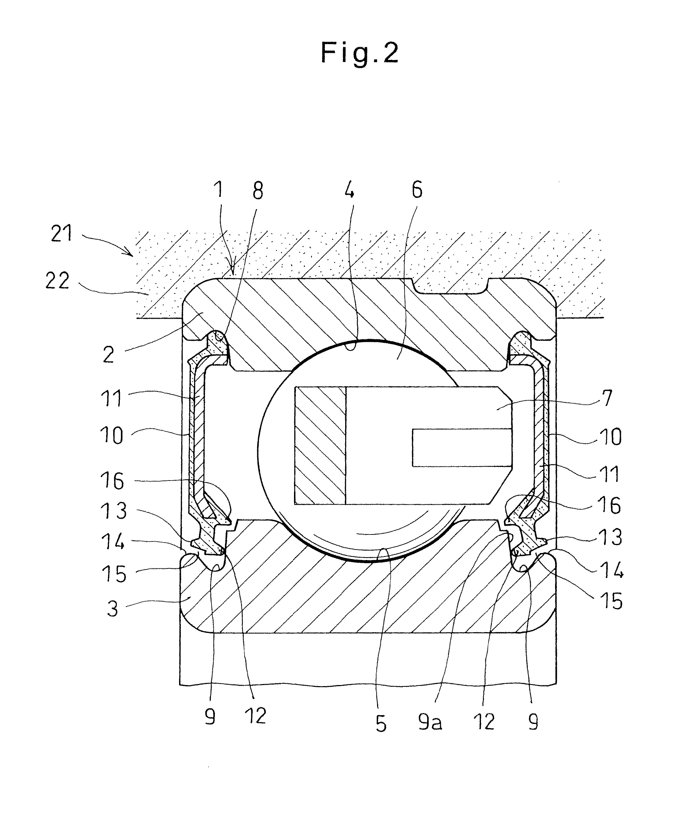

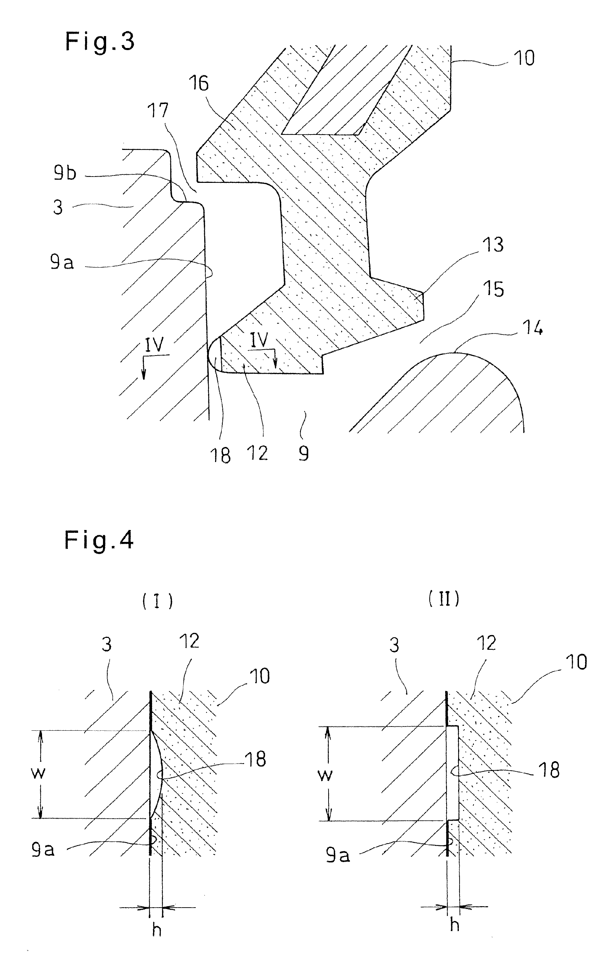

As shown in Figs. 2 and 3, the rubber seals 10 each include an inwardly extending lip 12 and an outwardly extending lip 13, at its radially inner portion. The outwardly extending lip 13 defines a labyrinth 15 in cooperation with a small-diameter cylindrical surface 14 formed on the axially outer portion of the seal groove 9. The rubber seals 10 each further include an annular protrusion 16 on its axially inner surface at its radially inner portion. The protrusion 16 defines a labyrinth 17 in cooperation with shoulder 9b formed on the inner side surface 9a of seal groove 9 at its radially outer portion.

As shown in Fig. 3, the inwardly extending lip 12 has its tip elastically in contact with the inner side surface 9a of the seal groove 9, and is formed with a recess 18 in its contact surface so as to extend a limited circumferential range. The recess 18 defines a minute gap in cooperation with the inner side surface 9a through which the bearing interior communicates with the exterior of the bearing.

The recess may be an arcuate groove as shown in Fig. 4(I) or a rectangular groove as shown in Fig. 4(II).

If the recess 18 is too deep and too wide in the circumferential direction, sealability deteriorates, allowing entry of foreign matter such as dust and water into the bearing, or leakage of bearing lubricating grease in the bearing to the outside of the bearing. If the recess 18 is smaller than necessary, the recess 18 will not serve the purpose as a passage for equalizing the pressures in and out of the bearing.

In order to avoid these problems, if the recess 18 is an arcuate groove, the recess 18 has a depth h of 0.01 to 0.08 mm at its circumferential center, and a width W of 0.2 to 0.8 mm. If the recess 18 is a rectangular groove, the recess 18 has a depth h of 0.01 to 0.08 mm and a width W of 0.2 to 0.8 mm.

By forming the recess 18 in the contact surface of the inwardly extending lip 12 that is in elastic contact with the inner side surface 9a of the seal groove 9, the bearing interior communicates with the exterior of the bearing through the gap defined by the recess 18. If the temperature and thus the pressure in the bearing interior rises when forming the belt guiding ring 21 on the radially outer surface of the outer race 2 by resin molding, the pressure is released to the outside through the gap defined by the recess 18.

The pressure in the bearing interior never rises and is kept at a constant level. When the bearing is cooled down after resin molding, too, the pressure in the bearing interior is kept at the constant level. This prevents the inwardly extending lip 12 of the rubber seal 10 from getting sucked onto the inner side surface 9a of the seal groove 9, which in turn prevents an increase in torque loss while the bearing is rotating.

In order to determine the influence of the depth h of the recess 18, bearing samples having recesses whose depths differ from one another were prepared and subjected to a water resistance test. Table 1 shows the results of the test. The test conditions are shown below:

### Test conditions

Revolving speed: 1500 rpm
Radial load: 294 N
Water injection rate: 200 ml/minute
Operating period: 5 minutes

**[Table 1]**

| Muddy water test | | | | |
|---|---|---|---|---|
| Bearing No. | Seal No, | Depth of slit | Water content in grease | Evaluation |
| A | A-1 | 0.06 | 0.11 | ○ |
| | A-2 | 0.06 | | |
| B | B-1 | 0.1 | 5.9 | × |
| | B-2 | 0.1 | | |
| C | C-1 | 0.06 | 0.04 | ○ |
| | C-2 | 0.06 | | |
| D | D-1 | 0.06 | 0.04 | ○ |
| | D-2 | 0.06 | | |
| E | E-1 | 0.08 | 0.04 | ○ |
| | E-2 | 0.08 | | |

[Test conditions] Revolving speed: 1500 rpm; Radial load: 294 N; Water injection rate: 200 ml/min; Operating period: 5 min

The test results show that by setting the depth h of the recess 18 at 0.08 mm or less, it is possible to prevent entry of water, and thus ensure enough sealability.

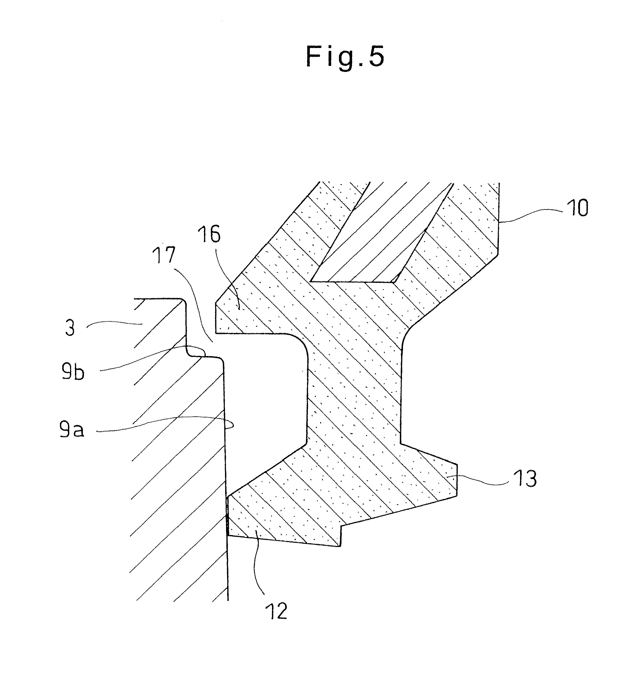

By setting the depth h of the recess 18 at 0.08 mm or less, when the tip of the inwardly extending lip 12 gradually becomes worn while the bearing is rotating due to contact with the inner side surface 9a of the seal groove 9, the recess 18 disappears as shown in Fig. 5, allowing the tip of the inwardly extending lip 12 to come into contact with the inner side surface 9a of the seal groove 9 over the entire surface of the tip of the lip 12. This means that the sealability improves gradually with the passage of time.

In the embodiment, the torque transmission member formed on the radially outer surface of the outer race 2 by resin molding is the belt guiding ring 21. But the torque transmission member according to the invention is not limited to the belt guiding ring 21 but may be e.g. a roller.

### DESCRIPTION OF THE NUMERALS

2. Outer race
3. Inner race
8. Seal fitting groove
9. Seal groove
9a. Inner side surface
10. Rubber seal
12. Inwardly extending lip
18. Recess
21. Belt guiding ring (torque transmission member)

## Claims

1. A ball bearing with seals on both sides, comprising an outer race formed with two seal fitting grooves on a radially inner surface of the outer race, each at one of two end portions of the outer race, a torque transmission member formed on a radially outer surface of the outer race by resin molding, an inner race provided radially inwardly of the outer race and formed with two seal grooves on a radially outer surface of the inner race, each at one of two end portions of the inner race, and rubber seals each having a radially outer portion fitted in the corresponding seal fitting groove, and having an inwardly extending lip having a tip which is kept in elastic contact with an inner side surface of the corresponding seal groove, thereby sealing the bearing interior, **characterized in that** a contact surface of the inwardly extending seal lip which is in elastic contact with the inner side surface of the seal groove is formed with a recess extending a limited circumferential range of the contact surface and defining a minute gap in cooperation with the inner side surface of the seal groove.

2. The ball bearing of claim 1, wherein the recess is an arcuate groove having a depth h of 0.01 to 0.08 mm at a circumferential center of the groove.

3. The ball bearing of claim 1, wherein the recess is a rectangular groove having a depth h of 0.01 to 0.08 mm.

4. The ball bearing of any of claims 1 to 3, wherein the rubber seals are made of nitrile rubber.

5. The ball bearing of any of claims 1 to 3, wherein the rubber seals are made of heat-resistant nitrile rubber.

6. The ball bearing of any of claims 1 to 3, wherein the rubber seals are made of hydrogenated nitrile rubber.

7. The ball bearing of any of claims 1 to 3, wherein the rubber seals are made of acrylic rubber.

8. The ball bearing of any of claims 1 to 3, wherein the rubber seals are made of fluororubber.

9. The ball bearing of any of claims 1 to 3, wherein the torque transmission member is a pulley.
